# EUROPEAN PATENT APPLICATION

(11) **EP 4 722 835 A1**
(43) Date of publication of application: **08.04.2026**
(21) Application number: 25206084.3
(22) Date of filing: 01.10.2025
(51) Int. Cl.: G05B 23/02

(54) **SYSTEM AND METHOD FOR DETECTING ANOMALIES DURING ASSET OPERATION**

(30) Priority: 01.10.2024 US 202418903581
(71) Applicant: GE Vernova Infrastructure Technology LLC, Greenville, SC 29615 (US)
(72) Inventor: Bonanni, Pierino G., Niskayuna, NY 12309 (US)
(74) Representative: Zimmermann & Partner Patentanwälte mbB

(57) **Abstract**

A method (200) for detecting anomalies during operation of an asset. The method includes collecting (202) data associated with operation of the asset. The data comprises operational parameters of the asset and environmental parameters around the asset. The method also includes selecting (204) a monitored parameter and one or more classification parameters. The method also includes selecting (206) an anomaly function for the monitored parameter given the one or more classification parameters. The anomaly function is determined based on respective conditional probability distributions of the monitored parameter given the one or more classification parameters. The method also includes determining (208) an anomaly threshold for the monitored parameter based on the anomaly function and the one or more classification parameters. The method also includes generating (210) an alert event when the monitored parameter exceeds the anomaly threshold. The method also includes actuating (212) a human-machine interface to output an alert based on comparing a score derived from the alert event to an alert threshold.

## Description

### FIELD

The present disclosure relates generally to wind farms and, more particularly, to systems and methods for detecting anomalies during operation of one or more wind farm assets.

### BACKGROUND

Wind power is considered one of the cleanest, most environmentally friendly energy sources presently available, and wind turbines have gained increased attention in this regard. A modem wind turbine typically includes a tower, a generator, a gearbox, a nacelle, and one or more rotor blades. The rotor blades capture kinetic energy of wind using known airfoil principles. For example, rotor blades typically have the cross-sectional profile of an airfoil such that, during operation, air flows over the blade producing a pressure difference between the sides. Consequently, a lift force, which is directed from a pressure side towards a suction side, acts on the blade. The lift force generates torque on the main rotor shaft, which is geared to a generator for producing electricity.

A plurality of wind turbines are commonly used in conjunction with one another to generate electricity and are commonly referred to as a "wind farm." During operation, it is advantageous to utilize various analytics to evaluate wind turbine and/or wind farm performance to ensure that the wind turbine(s) and/or wind farm are operating properly. Many analytics are trained on multi-parameter time-series data for an asset or group of assets and are then applied to an asset. Such analytics may include, for example, anomaly detection analytics that utilize various machine learning methods for identifying abnormal operation of the wind turbine(s) in the wind farm.

However, existing anomaly detection analytics have certain disadvantages. For example, machine learning methods are data-driven and may not consider physics of operation of the asset or assets (i.e. the wind turbine(s) and/or its various components). As such, the machine learning methods may not provide accurate anomaly detection analytics for an asset or assets for which the machine learning model was not trained. Thus, to apply these anomaly detection analytics, the machine learning methods must be trained utilizing data from each asset, which requires a large amount of time and training data. Furthermore, training the machine learning methods on data from each asset might require customization for each anomaly detection analytic.

In view of the foregoing, the present disclosure is directed to system and methods for detecting anomalies during operation of an asset by utilizing conditional probability distributions conditioned on operational and/or environmental parameters such that abnormal asset behavior can be detected from historical data of the asset.

### BRIEF DESCRIPTION

Aspects and advantages of the invention will be set forth in part in the following description, or may be obvious from the description, or may be learned through practice of the invention.

In an aspect, the present disclosure is directed to a method according to claim 1 for detecting anomalies during operation of an asset. The method includes collecting, via a controller, data associated with operation of the asset. The data comprises operational parameters of the asset and environmental parameters around the asset. The method also includes selecting a monitored parameter and one or more classification parameters. The monitored parameter is one of the operational parameters, and the one or more classification parameters are at least one of one or more other of the operational parameters or one or more of the environmental parameters. The method also includes selecting, via the controller, an anomaly function for the monitored parameter given the one or more classification parameters. The anomaly function is determined based on respective conditional probability distributions of the monitored parameter given the one or more classification parameters. The method also includes determining, via the controller, an anomaly threshold for the monitored parameter based on the anomaly function and the one or more classification parameters. The method also includes generating, via the controller, an alert event when the monitored parameter exceeds the anomaly threshold. The method also includes actuating, via the controller, a human-machine interface to output an alert based on comparing a score derived from the alert event to an alert threshold.

In another aspect, the present disclosure is directed to a system according to the independent system claim for detecting anomalies during operation of an asset. The system includes a controller communicatively coupled to the asset, the controller configured to perform a plurality of operations, including but not limited to selecting a monitored parameter and one or more classification parameters, the monitored parameter is one of the operational parameters, and the one or more classification parameters are at least one of one or more other of the operational parameters or one or more of the environmental parameters; selecting, via the controller, an anomaly function for the monitored parameter given the one or more classification parameters, the anomaly function being determined based on respective conditional probability distributions of the monitored parameter given the one or more classification parameters; determining, via the controller, an anomaly threshold for the monitored parameter based on the anomaly function and the one or more classification parameters; generating, via the controller, an alert event when the monitored parameter exceeds the anomaly threshold; and actuating, via the controller, a human-machine interface to output an alert based on comparing a score derived from the alert event to an alert threshold

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of an embodiment of a wind farm according to the present disclosure;
FIG. 2 illustrates a perspective view of an embodiment of a wind turbine according to the present disclosure;
FIG. 3 illustrates a block diagram of an embodiment of a controller of a wind turbine and/or or wind farm according to the present disclosure;
FIG. 4 illustrates a flow diagram of an embodiment of a method for detecting anomalies during operation of an asset according to the present disclosure;
FIG. 5 illustrates a schematic diagram of an embodiment of a system for detecting anomalies during operation of an asset according to the present disclosure;
FIG. 6 illustrates a plurality of exemplary conditional probability distributions of an exemplary monitored parameter given an exemplary classification parameter according to the present disclosure;
FIG. 7 illustrates a graph depicting an exemplary anomaly function representing the respective percentile thresholds of exemplary conditional probability distributions according to the present disclosure; and
FIG. 8 illustrates a graph depicting a comparison of an exemplary monitored parameter and a corresponding anomaly threshold over time according to the present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of an embodiment can be used with another embodiment to yield a still further embodiment. Thus, it is intended that the present invention covers such modifications and variations as come within the scope of the appended claims and their equivalents.

Generally, the present disclosure is directed to systems and methods for detecting anomalies during operation of one or more wind farm assets utilizing conditional probability distributions such that an alert is output in response to anomalous asset behavior being detected. Utilizing conditional probability distributions improves the performance of the system during application by permitting dynamic selection of anomaly thresholds based on classification of asset operation data, which eliminates the need for time-consuming manual anomaly threshold selection. In addition, in an embodiment, the conditional probability distributions are generated using historical data for an asset or assets. The conditional probability distributions are then applied to new data for an asset and so as to detect non-specific mechanical, operational or performance anomalies with the asset.

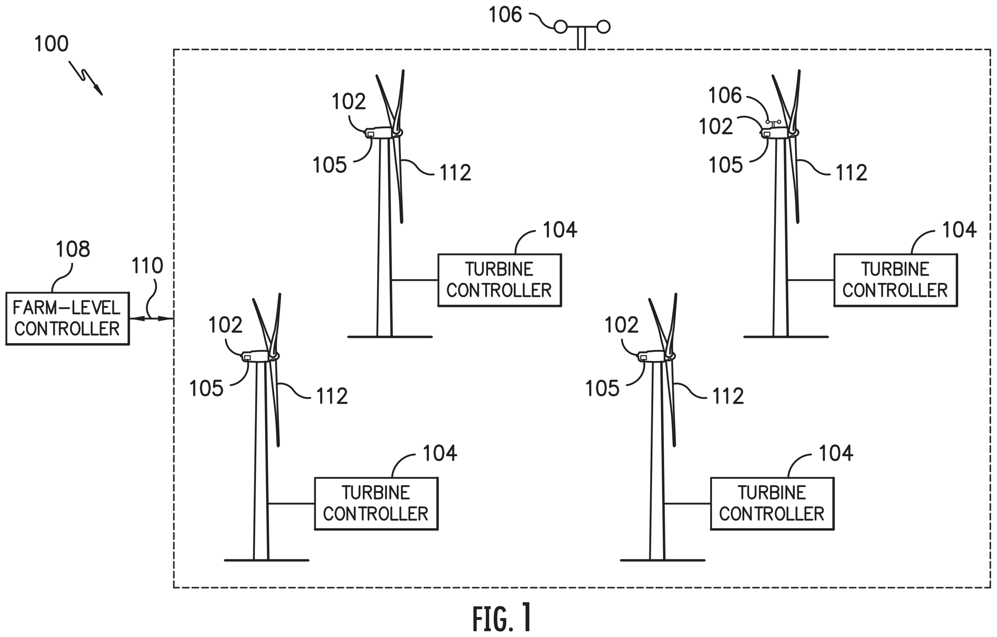

Referring now to the drawings, FIG. 1 illustrates an embodiment of a wind farm 100 containing a plurality of wind turbines 102 according to aspects of the present disclosure. The wind turbines 102 may be arranged in any suitable fashion. By way of example, the wind turbines 102 may be arranged in an array of rows and columns, in a single row, or in a random arrangement. Further, FIG. 1 illustrates an example layout of an embodiment of the wind farm 100. Typically, wind turbine arrangement in a wind farm is determined based on numerous optimization algorithms such that annual energy production (AEP) is maximized for corresponding site wind climate. It should be understood that any wind turbine arrangement may be implemented, such as on uneven land, without departing from the scope of the present disclosure. Further, while there are benefits to applying the method to turbines from one farm, the method may also be applied to a group of turbines from several farms.

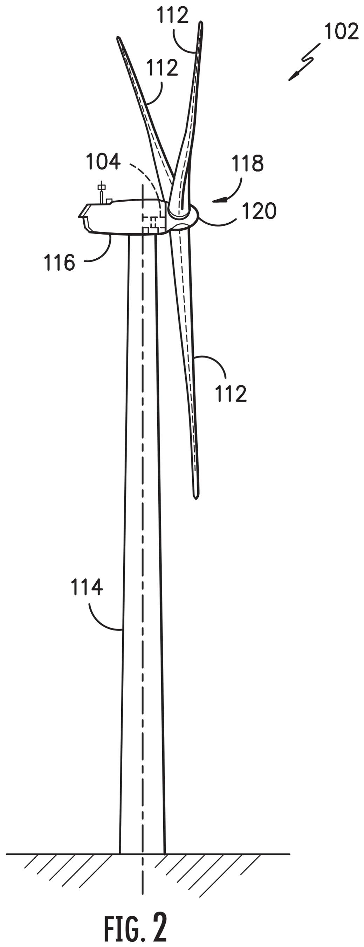

In addition, it should be understood that the wind turbines 102 of the wind farm 100 may have any suitable configuration, such as for example, as shown in FIG. 2. As shown, the wind turbine 102 includes a tower 114 extending from a support surface, a nacelle 116 mounted atop the tower 114, and a rotor 118 coupled to the nacelle 116. The rotor 118 includes a rotatable hub 120 having a plurality of rotor blades 112 mounted thereon, which is, in turn, connected to a main rotor shaft that is coupled to the generator (not shown) housed within the nacelle 116. Thus, the generator produces electrical power from the rotational energy generated by the rotor 118. It should be appreciated that the wind turbine 102 of FIG. 2 is provided for illustrative purposes only. Thus, one of ordinary skill in the art should understand that the invention is not limited to any particular type of wind turbine configuration.

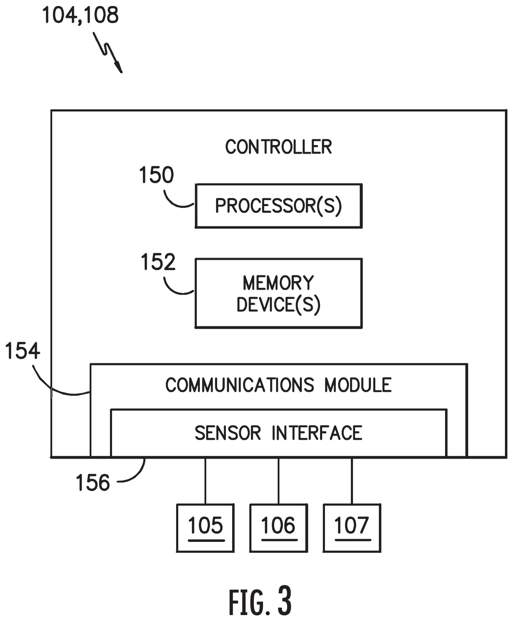

As shown generally in FIGS. 1-3, each wind turbine 102 of the wind farm 100 may also include a turbine controller 104 communicatively coupled to a farm controller 108. Moreover, in an embodiment, as shown in FIG. 1, the farm controller 108 may be coupled to the turbine controllers 104 through a network 110 to facilitate communication between the various wind farm components. The wind turbines 102 may also include one or more sensors 105, 106, 107 (FIGS. 1 and 3) configured to monitor various operating, wind, and/or loading conditions of the wind turbine 102.

For instance, the sensor(s) 105, 106, 107 may include blade sensors for monitoring the rotor blades 112; generator sensors 105 for monitoring generator loads, torque, speed, acceleration and/or the power output of the generator; wind sensors 106 for monitoring the one or more wind conditions; and/or shaft sensors for measuring loads of the rotor shaft and/or the rotational speed of the rotor shaft. Additionally, the wind turbine 102 may include one or more tower sensors for measuring the loads transmitted through the tower 114 and/or the acceleration of the tower 114. In various embodiments, the sensor(s) 105, 106, 107 may be any one of or combination of the following: temperature sensors, accelerometers, pressure sensors, angle of attack sensors, vibration sensors, Miniature Inertial Measurement Units (MIMUs), camera systems, fiber optic systems, anemometers, wind vanes, Sonic Detection and Ranging (SODAR) sensors, infra lasers, Light Detecting and Ranging (LIDAR) sensors, radiometers, pitot tubes, rawinsondes, other optical sensors, virtual sensors, estimates derived from multiple sensors, and/or any other suitable sensors.

Referring now to FIG. 3, there is illustrated a block diagram of an embodiment of suitable components that may be included within the farm controller 108, the turbine controller(s) 104, and/or other suitable controller according to the present disclosure. As shown, the controller(s) 104, 108 may include one or more processor(s) 150 (or servers) and associated memory device(s) 152 configured to perform a variety of computer-implemented functions (e.g., performing the methods, steps, calculations and the like and storing relevant data as disclosed herein). Additionally, the controller(s) 104, 108 may also include a communications module 154 to facilitate communications between the controller(s) 104, 108 and the various components of the wind turbine 102. Further, the communications module 154 may include a sensor interface 156 (e.g., one or more analog-to-digital converters) to permit signals transmitted from the sensor(s) 105, 106, 107 to be converted into signals that can be understood and processed by the processor(s) 150. It should be appreciated that the sensor(s) 105, 106, 107 may be communicatively coupled to the communications module 154 using any suitable means. For example, as shown, the sensor(s) 105, 106, 107 are coupled to the sensor interface 156 via a wired connection. However, in other embodiments, the sensor(s) 105, 106, 107 may be coupled to the sensor interface 156 via a wireless connection, such as by using any suitable wireless communications protocol known in the art.

As used herein, the term "processor" refers not only to integrated circuits referred to in the art as being included in a computer, but also refers to a controller, a microcontroller, a microcomputer, a programmable logic controller (PLC), a server, an application specific integrated circuit, and other programmable circuits. Additionally, the memory device(s) 152 may generally include memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD) and/or other suitable memory elements. Such memory device(s) 152 may generally be configured to store suitable computer-readable instructions that, when implemented by the processor(s) 150, configure the controller(s) 104, 108 to perform various functions as described herein.

Moreover, the network 110 that couples the farm controller 108, the turbine controllers 104, and/or the sensor(s) 105, 106, 107 in the wind farm 100 may include any known communication network such as a wired or wireless network, optical networks, and the like. In addition, the network 110 may be connected in any known topology, such as a ring, a bus, or hub, and may have any known contention resolution protocol without departing from the art. Thus, the network 110 is configured to provide data communication between the turbine controller(s) 104 and the farm controller 108 in near real time.

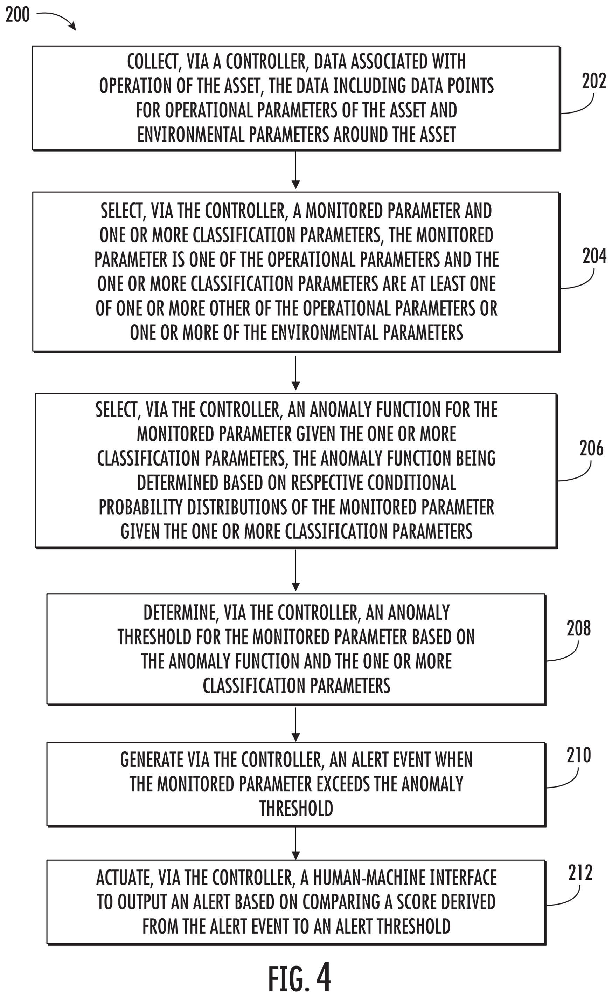

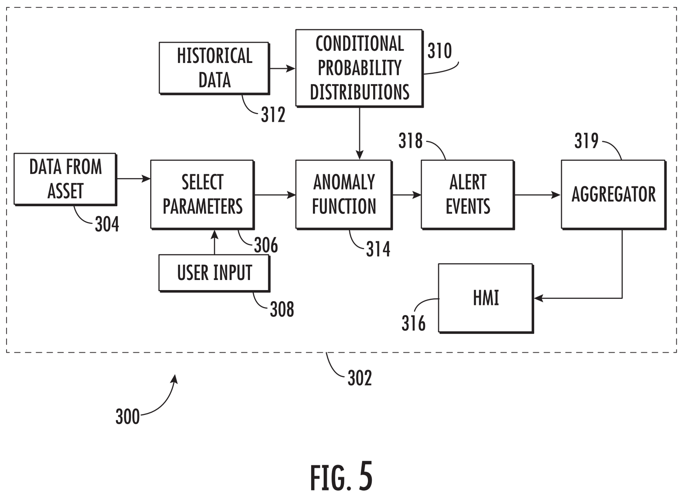

As generally understood, wind turbines generally include a plurality of operational analytics, which generally refer to collected and analyzed data modules associated with operation of the wind turbine that is or can be categorized, stored, and/or analyzed to study various trends or patterns in the data. Thus, in an embodiment, the analytic(s) described herein may include, as an example, an anomaly detection analytic that can be used to identify anomalies within operational data of the wind turbine or a group of wind turbines. Accordingly, as shown in FIGS. 4 and 5, the present disclosure is directed to a method 200 and system 300 for detecting anomalies during operation of an asset.

More specifically, FIG. 4 illustrates a flow diagram of the method 200 for detecting anomalies during operation of an asset according to the present disclosure, whereas FIG. 5 illustrates a schematic diagram of the system 300 for detecting anomalies during operation of an asset according to the present disclosure. In general, as shown in FIG. 4, the method 200 described herein can be implemented with the wind turbine 102 and/or the wind farm 100 described above. However, it should be appreciated that the disclosed method 200 may be used with any other suitable asset having any suitable configuration. In addition, although FIG. 4 depicts steps performed in a particular order for purposes of illustration and discussion, the methods described herein are not limited to any particular order or arrangement. One skilled in the art, using the disclosures provided herein, will appreciate that various steps of the methods can be omitted, rearranged, combined and/or adapted in various ways.

As shown at (202), the method 200 includes collecting, via a controller, data associated with operation of an asset (e.g., a wind turbine 102). For example, as shown in FIG. 5, the system 300 may include the controller 302 (such as the farm controller 108). The controller 302 may collect data associated with one or more assets 304. In an embodiment, as shown, the controller 302 collects data from one asset 304 (e.g., a wind turbine 102). In another embodiment, the controller 302 collects data from a group of assets (e.g., multiple wind turbines 102 in the wind farm 100). In such an embodiment, when data is collected from the groups of assets, each asset in the group may be similar in that each asset is expected to behave or perform in substantially the same manner (e.g., have similar data variation patterns).

While the method 200 is applied to wind turbines 102 in the present disclosure, it should be understood that the method 200 may be applicable to other assets, components, or device types (i.e. where multiple instances exist) that are to be monitored and are expected to behave or perform in substantially the same manner. Thus, the method 200 may be applicable to solar panels, energy storage devices or systems, engines, vehicles, trucks, and/or aircraft. Further, the method 200 may be applicable to sub-components of larger systems, such as valves, gearboxes, electrical circuits, power converters, bearings, or any other system component.

The data associated with operation of the asset 304 can be collected by one or more of the sensors 105, 106, 107. The collected data can then be organized (e.g., based on an identifier (such as a serial number) for the asset) and stored (e.g., in a memory device 152 of the controller 302). In an embodiment, the collected data includes operational parameters of the asset and environmental parameters around the asset. The operational parameters include values for various parameters defining an operating state of the asset. By way of example, the collected data can include sensed values for various operational parameters, such as rotor speed, rotor pitch, nacelle yaw, actual power output, generator speed, etc. The sensed values for these operational parameters can be utilized to calculate or determine (e.g., via model-based estimation) values for other operational parameters associated with the asset (e.g., mechanical loads, component stresses and strains, expected power output, etc.). The calculated values can be included in the data associated with the operation of the asset 304.

The environmental parameters include values for various parameters defining an environmental state around the asset. By way of example, the collected data can include sensed values for various environmental parameters, such as wind speed, wind direction, ambient temperature, etc. The sensed values for these environmental parameters can be utilized to calculate or determine values for other environmental parameters associated with the asset (e.g., wind turbulence, wind effects, etc.). The calculated values can be included in the data associated with the operation of the asset 304.

Referring back to FIG. 4, as shown at (204), the method 200 includes selecting, via the controller 302, a monitored parameter and one or more classification parameters. The monitored parameter is one of the operational parameters. The classification parameter(s) is at least one of one or more other of the operational parameters or one or more of the environmental parameters. By way of example, as shown in FIG. 5, the controller 302 can select the monitored parameter and the classification parameter(s) based on a user input 308. In such an example, the user can provide an input to a human-machine interface (HMI) 316, as explained below, specifying parameters for selection. Accordingly, the controller 302 can use the user input 308 to select 306 the monitored parameter and the classification parameter(s). That is, the controller 302 can select the operational parameter specified, by the user input 308, as the monitored parameter and the at least one of one or more other of the operational parameters or one or more of the environmental parameters specified, by the user input 308, as the classification parameter(s). As another example, the controller 302 may access a look-up table, or the like (e.g., stored in the memory device 152 of the controller 302) that associates various monitored parameters with various classification parameters. In such an example, the controller 302 can iteratively select various monitored parameters and corresponding classification parameters.

Referring back to FIG. 4, as shown at (206), the method 200 includes selecting, via the controller 302, an anomaly function 314 for the monitored parameter given the one or more classification parameters. The anomaly function 314 represents an anomaly threshold for the monitored parameter as a function of the one or more classification parameters. As noted above and illustrated in FIG. 5, the controller 302 can receive a user input 308 specifying the monitored parameter and the one or more classification parameters. The controller 302 can select the anomaly function 314 associated with the specified monitored parameter and the specified classification parameter(s). For example, the controller 302 can access a look-up table, or the like, (e.g., stored in the memory devices 152 of the controller 302) that associates various anomaly functions 314 with various monitored parameters given corresponding classification parameters. Anomaly functions 314 for various monitored parameters given various classification parameters may be stored by the controller 302 (e.g., in the memory devices 152 thereof).

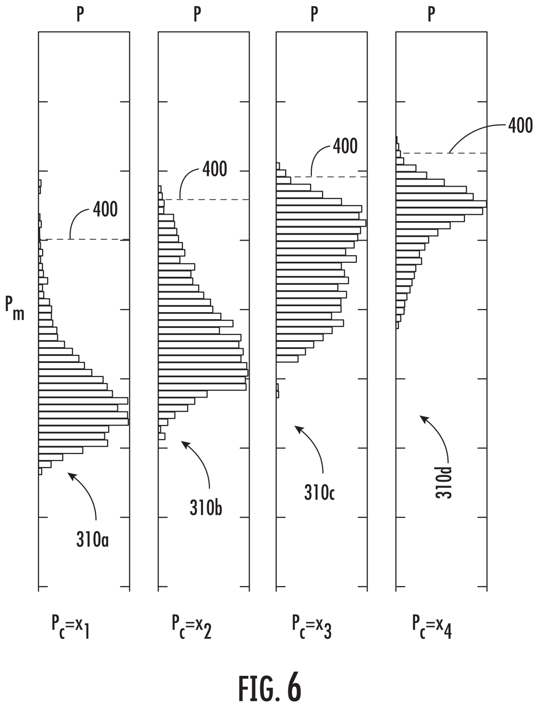

Moreover, the anomaly function 314 is determined based on respective conditional probability distributions 310 indicating probabilities of values for the monitored parameter given respective values for the classification parameter(s). By way of example, FIG. 6 provides a plurality of conditional probability distributions 310a, 310b, 310c, 310d of a monitored parameter Pₘ given exemplary values x₁, x₂, x₃, x₄ of one classification parameter P_{c}. As depicted, each conditional probability distribution 310a, 310b, 310c, 310d indicates probabilities P for values of the monitored parameter Pₘ given the respective values x₁, x₂, x₃, x₄ of the one classification parameter P_{c}. The values of the monitored parameter Pₘ may be binned (i.e., categorized based on a range of values and represented by a value representative of the range) according to known data pre-processing techniques.

Furthermore, a percentile threshold 400 may be specified for the plurality of conditional probability distributions 310a, 310b, 310c, 310d. The percentile threshold 400 may be specified via a user input. For example, the HMI 316 may receive a user input specifying the percentile threshold 400. The controller 302 can then store the percentile threshold 400 (e.g., in the memory devices 152 thereof). The percentile threshold 400 specifies a value of the monitored parameter Pₘ which is greater than a given percentage of values of the monitored parameter Pₘ for the respective conditional probability distribution 310a, 310b, 310c, 310d. The percentile threshold 400 may be any suitable percentile (e.g., 50 percentile, 75 percentile, 97 percentile, 99.7 percentile, etc.). For example, the percentile threshold 400 may be specified based on a sampling rate of the data associated with operation of the asset, a number of expected alert events within a time period, and/or a sample size of historical data utilized to generate the conditional probability distributions 310a, 310b, 310c, 310d. As one non-limiting example, the user may specify the percentile threshold 400 to be the 99.3 percentile, which corresponds to one expected alert event per day at a data sampling rate of once every ten minutes.

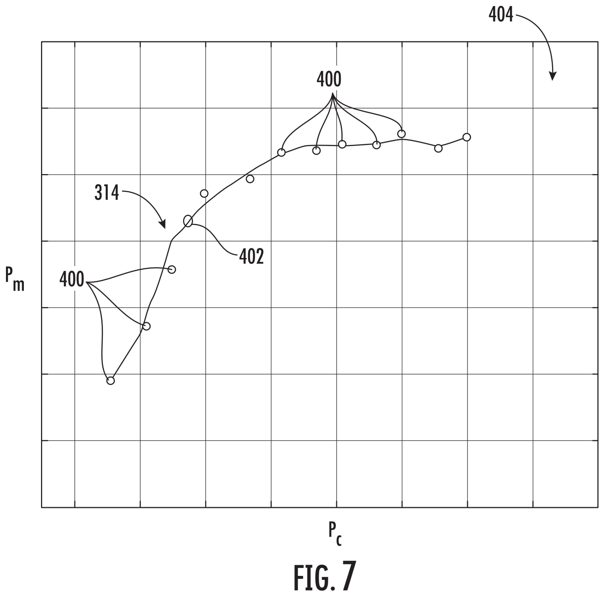

Upon determining the percentile threshold 400, the controller 302 can, for example, plot points defined by the respective values of the monitored parameter Pₘ corresponding to the percentile threshold 400 for the respective conditional probability distributions 310a, 310b, 310c, 310d. An anomaly function 314 for the monitored parameter Pₘ given the classification parameter P_{c} can then be generated via the controller 302 by applying one or more regression techniques to the points. By way of example, FIG. 7 provides a graph 404 depicting an exemplary anomaly function 314 representing the respective values of the monitored parameter Pₘ corresponding to the percentile threshold 400 for the respective conditional probability distribution 310a, 310b, 310c, 310d as a function of the exemplary values x₁, x₂, x₃, x₄ of the one classification parameter P_{c}. Any suitable regression technique or techniques can then be used to generate the anomaly function 314 relative to the points. One or more linear regression and/or non-linear regression techniques can be utilized to generate the preliminary regression line relative to the data points.

In an embodiment, the method 200 may include generating, via the controller 302, the respective conditional probability distributions 310a, 310b, 310c, 310d based on historical data 312 associated with operation of the asset. For example, the historical data 312 may be aggregated for the asset over a period of time. The period of time may be determined based on obtaining a statistically significant number of data points that include the exemplary values x₁, x₂, x₃, x₄ of the one classification parameter P_{c} for the respective conditional probability distributions 310a, 310b, 310c, 310d. The statistically significant number of data points may be determined as a function of the percentile threshold 400. The historical data 312 may be associated with operation of a group of assets including the asset. Collecting data from the group of assets including the asset can reduce an amount of time to train the conditional probability distributions by aggregating data collected (e.g., simultaneously) from assets expected to behave or perform in substantially the same manner.

The historical data 312 may, for example, be simulated data. In such an example, the conditional probability distributions 310a, 310b, 310c, 310d may be generated based on data obtained via a computer simulation, such as a Monte Carlo simulation. As another example, the historical data 312 may be measured data. In such an example, the conditional probability distributions 310a, 310b, 310c, 310d may be generated based on data sense/calculated via one or more sensors.

Referring back to FIG 4., as shown at (208), the method 200 includes determining, via the controller 302, an anomaly threshold 402 for the monitored parameter Pₘ based on the anomaly function 314 and the respective values of the one or more classification parameters P_{c}. As shown in FIG. 7, the anomaly threshold 402 is a value for the monitored parameter Pₘ that is output by the anomaly function 314 for given classification parameters P_{c}. For example, the controller 302 can input the sense/calculated values of the one or more classification parameters P_{c} into the selected anomaly function 314, which outputs the anomaly threshold 402 for the monitored parameter Pₘ. As another example, the controller 302 can access a look-up table, or the like (e.g., stored in the memory device 152) that associates various anomaly thresholds 402 with various values of corresponding classification parameters P_{c} for given anomaly functions 314. In such an example, the controller 302 can access the look-up table for the selected anomaly function 314 and can then select the anomaly threshold 402 associated with the sensed/calculated values of the one or more classification parameters P_{c} in the look-up table.

Referring back to FIG. 4, as shown at (210), the method 200 includes determining, via the controller 302, an alert event when the value of the monitored parameter Pₘ exceeds the anomaly threshold 402. For example, the controller 302 can compare the sensed/calculated value of the monitored parameter Pₘ to the anomaly threshold 402 determined at (208). The controller 302 can then determine an alert event 318 when the monitored parameter Pₘ exceeds the anomaly threshold 402. The alert event 318 can be stored by the controller 302 (e.g., in the memory devices 152 thereof). The alert event 318 may, for example, be represented by a timestamp for the data including the value of the monitored parameter Pₘ that exceeds the anomaly threshold 402.

Referring back to FIG. 4, as shown at (212), the method 200 includes actuating, via the controller 302, the HMI 316 to output an alert based on comparing the alert event to an alert threshold. For example, as shown in FIG. 5, the controller 302 may also include the HMI 316. The HMI 316 can enable a user to interact with the controller 302. In some embodiments, the HMI 316 can include one or more interfaces that display information to a user, such as a display screen, and can also include one or more interfaces that allow a user to interact with information displayed on the screen, such as including a touch-screen component, a mouse component, a keyboard component, a stylus component, and the like. In some embodiments, the HMI 316 can include one or more interfaces that present audio information to the user, such as a speaker. That is, the controller 302 can control the HMI 316 to output audio and/or visual information to the user. Additionally, the HMI 316 can receive information from a user. For example, the HMI 316 can receive user inputs (e.g., via sensors detecting a user pressing a virtual button on a touchscreen, via the mouse component receiving a user input specifying selection of information displayed on the screen, via the keyboard component receiving a user input specifying alphanumeric information, etc.) specifying information to the controller 302.

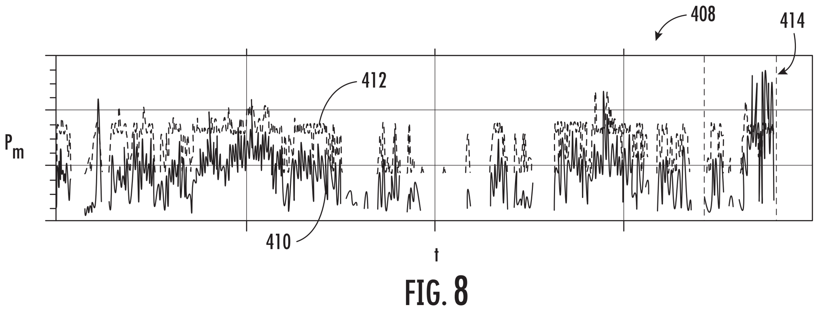

By way of example, FIG. 8 provides a graph 408 depicting a comparison of measured values of the monitored parameter Pₘ (shown via the solid line 410) and corresponding values of the anomaly threshold (shown via the dotted line 412) over time. The alert may include audio and/or visual information that indicates anomalous behavior of an asset or a group of assets. In some embodiments, the HMI 316 may further be actuated to output previous alerts and timestamps associated with the previous alerts.

The alert threshold may specify a maximum number of expected anomalies within a monitoring period 414, as explained below. In an embodiment, the alert threshold may be determined based on the historical data used to generate the conditional probability distributions 310a, 310b, 310c, 310d. For example, the alert threshold may be determined based on a maximum number of alert events within a time period of collection of the historical data. Alternatively, the alert threshold may be predetermined based on design and/or performance parameters for the asset (e.g., specified by a manufacturer of the asset or a component thereof).

In an embodiment, the method 200 can include actuating, via the controller 302, the HMI 316 when a score derived from alert events exceeds the alert threshold. In an embodiment, the method 200 can include counting a number of alert events within the monitoring period 414 to determine the score and then comparing the score to the alert threshold.

As shown in FIG. 8, the monitoring period 414 may, for example, may be defined by an amount of time (e.g., one minute, one hour, one day, one week, etc.). In such an example, the monitoring period 414 may include a period of time terminating at the current time and defined by a specified amount of time prior to a current time (e.g., a time at which the value of the monitored parameter is captured). As another example, the monitoring period 414 may be defined by a number of instances of data collection expected to be collected within the amount of time for the monitored parameter given a state of operation of the asset (e.g., start-up, normal power production, shut-down, etc.). The state of operation of the asset may be defined by one or more parameters of the asset. The one or more parameters may be the same as or different from the one or more classification parameters. By way of example, data may be collected at a certain sampling rate (i.e., a specified number of instances per unit of time, such as 144 instances per day). As such, the monitoring period 414 may include a period of time terminating at the current time and defined by an amount of time to collect the specified number of instances (e.g., 144) of data for the monitored parameter Pₘ given the state of operation of the asset.

Furthermore, in another embodiment, the method 200 can include determining respective scale values for each of the alert events within the monitoring period 414 based on differences between the value of the monitored parameter Pₘ and the anomaly threshold 402. For example, the scale value may be determined by a ratio of the value of the monitored parameter Pₘ and the anomaly threshold 402. As another example, the scale value may be determined by a ratio of a first difference between the value of the monitored parameter Pₘ and a mean value of the corresponding conditional probability distribution 310a, 310b, 310c, 310d and a second difference between the anomaly threshold 402 and the mean value of the corresponding conditional probability distribution 310a, 310b, 310c, 310d.

The method 200 can further include determining the score based on combining (e.g., via addition or multiplication) the respective scale values within the monitoring period 414. The method 200 can further include actuating the HMI 316 when the score exceeds the alert threshold, as discussed above. In such an embodiment, the alert events may be weighted by the respective scale values. Weighting the alert events can adjust the sensitivity of outputting the alert, which can reduce instances of undesirable alert outputs.

Various aspects and embodiments of the present invention are defined by the following numbered clauses:

A method for detecting anomalies during operation of an asset, the method comprising: collecting, via a controller, data associated with operation of the asset, the data comprising operational parameters of the asset and environmental parameters around the asset; selecting a monitored parameter and one or more classification parameters, the monitored parameter is one of the operational parameters, and the one or more classification parameters are at least one of one or more other of the operational parameters or one or more of the environmental parameters; selecting, via the controller, an anomaly function for the monitored parameter given the one or more classification parameters, the anomaly function being determined based on respective conditional probability distributions of the monitored parameter given the one or more classification parameters; determining, via the controller, an anomaly threshold for the monitored parameter based on the anomaly function and the one or more classification parameters; generating, via the controller, an alert event when the monitored parameter exceeds the anomaly threshold; and actuating, via the controller, a human-machine interface to output an alert based on comparing a score derived from the alert event to an alert threshold.

The method of any preceding clause, further comprising generating, via the controller, the respective conditional probability distributions based on historical data associated with operation of the asset.

The method of any preceding clause, wherein the historical data is further associated with operation of a group of assets including the asset.

The method of any preceding clause, further comprising determining the alert threshold based on the historical data.

The method of any preceding clause, wherein the alert threshold specifies a maximum number of expected anomalies within a monitoring period.

The method of any preceding clause, wherein the monitoring period is defined by an amount of time or a number of instances of data collection expected to be collected within the amount of time for the monitored parameter given a state of operation of the asset.

The method of any preceding clause, wherein actuating, via the controller, the human-machine interface to output the alert based on comparing the score derived from the alert event to the alert threshold further comprises: actuating the human-machine interface when the score exceeds the alert threshold.

The method of any preceding clause, further comprising determining the score by counting a number of alert events within a monitoring period defined by an amount of time or a number of instances of data collection expected to be collected within the amount of time for the monitored parameter given a state of operation of the asset.

The method of any preceding clause, wherein actuating, via the controller, the human-machine interface to output the alert based on comparing the score derived from the alert event to the alert threshold further comprises: determining respective scale values for each alert event within a monitoring period based on differences between the monitored parameter and the anomaly threshold; determining the score based on combining the respective scale values; and actuating the human-machine interface when the score exceeds the alert threshold.

The method of any preceding clause, wherein the monitoring period is defined by an amount of time or a number of instances of data collection expected to be collected within the amount of time for the monitored parameter given a state of operation of the asset.

A system for detecting anomalies during operation of an asset, the system comprising: a controller communicatively coupled to the asset, the controller configured to perform a plurality of operations, the plurality of operations comprising: collecting, via a controller, data associated with operation of the asset, the data comprising operational parameters of the asset and environmental parameters around the asset; selecting a monitored parameter and one or more classification parameters, the monitored parameter is one of the operational parameters, and the one or more classification parameters are at least one of one or more other of the operational parameters or one or more of the environmental parameters; selecting, via the controller, an anomaly function for the monitored parameter given the one or more classification parameters, the anomaly function being determined based on respective conditional probability distributions of the monitored parameter given the one or more classification parameters; determining, via the controller, an anomaly threshold for the monitored parameter based on the anomaly function and the one or more classification parameters; generating, via the controller, an alert event when the monitored parameter exceeds the anomaly threshold; and actuating, via the controller, a human-machine interface to output an alert based on comparing a score derived from the alert event to an alert threshold.

The system of any preceding clause, wherein the plurality of operations further comprises: generating, via the controller, the respective conditional probability distributions based on historical data associated with operation of the asset.

The system of any preceding clause, wherein the historical data is further associated with operation of a group of assets including the asset.

The system of any preceding clause, wherein the plurality of operations further comprises: determining the alert threshold based on the historical data.

The system of any preceding clause, wherein the alert threshold specifies a maximum number of expected anomalies within a monitoring period.

The system of any preceding clause, wherein the monitoring period is defined by an amount of time or a number of instances of data collection expected to be collected within the amount of time for the monitored parameter given a state of operation of the asset.

The system of any preceding clause, wherein actuating, via the controller, the human-machine interface to output the alert based on comparing the score derived from the alert event to the alert threshold further comprises: actuating the human-machine interface when the score exceeds the alert threshold.

The system of any preceding clause, wherein the plurality of operations further comprises: determining the by counting a number of alert events within a monitoring period defined by an amount of time or a number of instances of data collection expected to be collected within the amount of time for the monitored parameter given a state of operation of the asset.

The system of any preceding clause, wherein actuating, via the controller, the human-machine interface to output the alert based on comparing the score derived from the alert event to the alert threshold further comprises: determining respective scale values for each alert event within a monitoring period based on differences between the value of the monitored parameter and the anomaly threshold; determining the score based on combining the respective scale values; and actuating the human-machine interface when the score exceeds the alert threshold.

The system of any preceding clause, wherein the monitoring period is defined by an amount of time or a number of instances of data collection expected to be collected within the amount of time for the monitored parameter given a state of operation of the asset.

This written description uses examples to disclose the invention, including the best mode, and also to enable any person skilled in the art to practice the invention, including making and using any devices or systems and performing any incorporated methods.

## Claims

1. A method for detecting anomalies during operation of an asset, the method comprising:
collecting, via a controller, data associated with operation of the asset, the data comprising operational parameters of the asset and environmental parameters around the asset;
selecting a monitored parameter and one or more classification parameters, the monitored parameter is one of the operational parameters, and the one or more classification parameters are at least one of one or more other of the operational parameters or one or more of the environmental parameters;
selecting, via the controller, an anomaly function for the monitored parameter given the one or more classification parameters, the anomaly function being determined based on respective conditional probability distributions of the monitored parameter given the one or more classification parameters;
determining, via the controller, an anomaly threshold for the monitored parameter based on the anomaly function and the one or more classification parameters;
generating, via the controller, an alert event when the monitored parameter exceeds the anomaly threshold; and
actuating, via the controller, a human-machine interface to output an alert based on comparing a score derived from the alert event to an alert threshold.

2. The method of claim 1, further comprising generating, via the controller, the respective conditional probability distributions based on historical data associated with operation of the asset.

3. The method of claim 2, wherein the historical data is further associated with operation of a group of assets including the asset.

4. The method of claims 2-3, further comprising determining the alert threshold based on the historical data.

5. The method of any preceding claim, wherein the alert threshold specifies a maximum number of expected anomalies within a monitoring period.

6. The method of claim 5, wherein the monitoring period is defined by an amount of time or a number of instances of data collection expected to be collected within the amount of time for the monitored parameter given a state of operation of the asset.

7. The method of any preceding claim, wherein actuating, via the controller, the human-machine interface to output the alert based on comparing the score derived from the alert event to the alert threshold further comprises:
actuating the human-machine interface when the score exceeds the alert threshold.

8. The method of claim 7, further comprising determining the score by counting a number of alert events within a monitoring period defined by an amount of time or a number of instances of data collection expected to be collected within the amount of time for the monitored parameter given a state of operation of the asset.

9. The method of any preceding claim, wherein actuating, via the controller, the human-machine interface to output the alert based on comparing the score derived from the alert event to the alert threshold further comprises:
determining respective scale values for each alert event within a monitoring period based on differences between the monitored parameter and the anomaly threshold;
determining the score based on combining the respective scale values; and
actuating the human-machine interface when the score exceeds the alert threshold.

10. The method of claim 9, wherein the monitoring period is defined by an amount of time or a number of instances of data collection expected to be collected within the amount of time for the monitored parameter given a state of operation of the asset.

11. A system for detecting anomalies during operation of an asset, the system comprising:
a controller communicatively coupled to the asset, the controller configured to perform a plurality of operations, the plurality of operations comprising:
collecting, via a controller, data associated with operation of the asset, the data comprising operational parameters of the asset and environmental parameters around the asset;
selecting a monitored parameter and one or more classification parameters, the monitored parameter is one of the operational parameters, and the one or more classification parameters are at least one of one or more other of the operational parameters or one or more of the environmental parameters;
selecting, via the controller, an anomaly function for the monitored parameter given the one or more classification parameters, the anomaly function being determined based on respective conditional probability distributions of the monitored parameter given the one or more classification parameters;
determining, via the controller, an anomaly threshold for the monitored parameter based on the anomaly function and the one or more classification parameters;
generating, via the controller, an alert event when the monitored parameter exceeds the anomaly threshold; and
actuating, via the controller, a human-machine interface to output an alert based on comparing a score derived from the alert event to an alert threshold.

12. The system of claim 11, wherein the plurality of operations further comprises:
generating, via the controller, the respective conditional probability distributions based on historical data associated with operation of the asset.

13. The system of claim 12, wherein the historical data is further associated with operation of a group of assets including the asset.

14. The system of claims 12-13, wherein the plurality of operations further comprises:
determining the alert threshold based on the historical data.

15. The system of claims 11-14, wherein the alert threshold specifies a maximum number of expected anomalies within a monitoring period.
